# EUROPEAN PATENT SPECIFICATION

(11) **EP 2 060 767 B1**
(45) Date of publication and mention of the grant of the patent: **21.05.2025**
(21) Application number: 08252854.8
(22) Date of filing: 28.08.2008
(51) Int. Cl.: F02K 1/60

(54) **Pivoting door thrust reverser for a turbofan gas turbine engine**
Schubumkehrdüse mit schwenkbarer Klappe eines Gasturbinenturbofantriebwerks
Inverseur de poussée à porte pivotante pour un moteur à turbine à gaz de réacteur à double flux

(30) Priority: 16.11.2007 US 941371
(43) Date of publication of application: 20.05.2009
(73) Proprietor: Pratt & Whitney Canada Corp., Longueuil, QC J4G 1A1 (CA); Gulfstream Aerospace Corporation, Savannah, Georgia 31402 (US)
(72) Inventor: Lair, Jean-Pierre, San Antonio Texas 78209 (US)
(74) Representative: LKGlobal UK Ltd.

(56) References cited:
- EP-A1- 0 131 079
- GB-A- 745 649
- GB-A- 788 359
- US-A- 5 615 834

## Description

### TECHNICAL FIELD

The invention relates to thrust reverser doors for turbofan gas turbine engines.

### BACKGROUND

A thrust reverser of the bucket/target type has doors that can be moved from a stowed position to a deployed position so as to deflect at least a portion of the gases coming out of the gas turbine engine and create a braking force slowing down the aircraft. The deflected gases come from the by-pass flow or from both the by-pass flow and the core flow of the engine.

Challenges in the design of thrust reversers include the need to minimize weight and to provide the various parts within the smallest possible space. It will be appreciated that the actuators, door pivots and pivot arms of a thrust reverser must fit within the envelope provided between the outer mold line (OML) and inner mold line (IML) of the nacelle and thrust reverser. Traditionally, these components are relatively bulky, and thus a significant envelope or space is required between OML and IML to accommodate them, resulting in a larger nacelle outer surface and increased drag, in comparison to a nacelle without a thrust reverser. Therefore, the pivots and mounting of the thrust reverser doors is one area where improvements are needed.

British Patent Specification No. GB - A - 745 649 discloses an aircraft-reaction propulsion unit or installation comprising a jet-pipe, a propulsion nozzle at the outlet end of the jet-pipe, porting in the wall of the jet-pipe upstream of the propulsion nozzle leading to auxiliary ducting extending from the porting to an outlet to atmosphere and inclined forwardly to the direction of flight at its outlet end so that gas flowing through the auxiliary ducting produces a braking effect on an aircraft fitted with the unit, and at least one valve member adapted to swing about an axis at right angles to the jet-pipe axis and passing through it and adapted in one position to close off the passage through said auxiliary ducting and in a second position to block the flow through the jet-pipe to the propulsion nozzle.

British Patent Specification No. GB - A - 788 359 discloses a discharge nozzle for a propulsive fluid stream having at least one wall portion extending downstreamwardly of a duct for the fluid stream, supporting means for the wall portion and a pivot attachment between the latter and the supporting means whereby the wall portion is pivotable about an axis extending transversely to the direction of fluid flow at a region upstream of the downstream end of the wall portion to vary the configuration of the nozzle and wherein the pivot attachment is movable transversely to the fluid stream independently of pivotal movement of the wall portion to vary the flow area of the nozzle.

Patent document US 5 615 834 A discloses a thrust reverser of the prior art.

### SUMMARY

According to an aspect of the present invention, there is provided a thrust reverser as specified in claim 1. According to another aspect of the present invention, there is provided a thrust reverser as specified in any of claims 2 - 10. According to a further aspect of the present invention, there is provided a method of pivotally connecting a thrust reverser door to a thrust reverser as specified in claim 11.

Further details of these and other aspects of the improvements presented herein will be apparent from the detailed description and appended figures.

### BRIEF DESCRIPTION OF THE FIGURES

FIG. 1 is a side view of an example of a nacelle provided with a thrust reverser, its doors being shown in a stowed position;
FIG. 2 is a schematic side view of an example of a jet pipe to which are connected thrust reverser doors, which doors are shown in a deployed position;
FIG. 3 is a rear view of what is shown in FIG. 2;
FIG. 4 is an enlarged isometric view showing an example of the improved pivot fitting;
FIG. 5 is an isometric view showing a pair of pivot fittings being flush mounted inside a jet pipe;
FIG. 6 is an isometric and partially exploded view showing the pivot fittings of FIG. 5 from outside the jet pipe;
FIG. 7 is a cross-sectional view taken along line 7-7 in FIG. 6;
FIG. 8 is a side view showing an example of pivot arms being mounted on the shafts of the pivot fittings of FIGS. 5 and 6; and
FIG. 9 is a view similar to FIG. 7, schematically showing a prior art arrangement for comparison purposes.

### DETAILED DESCRIPTION

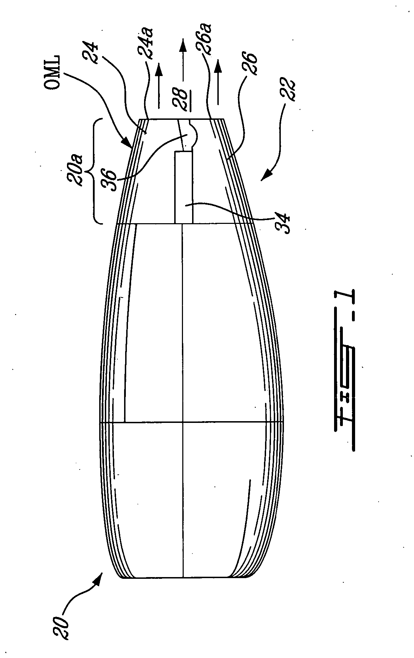

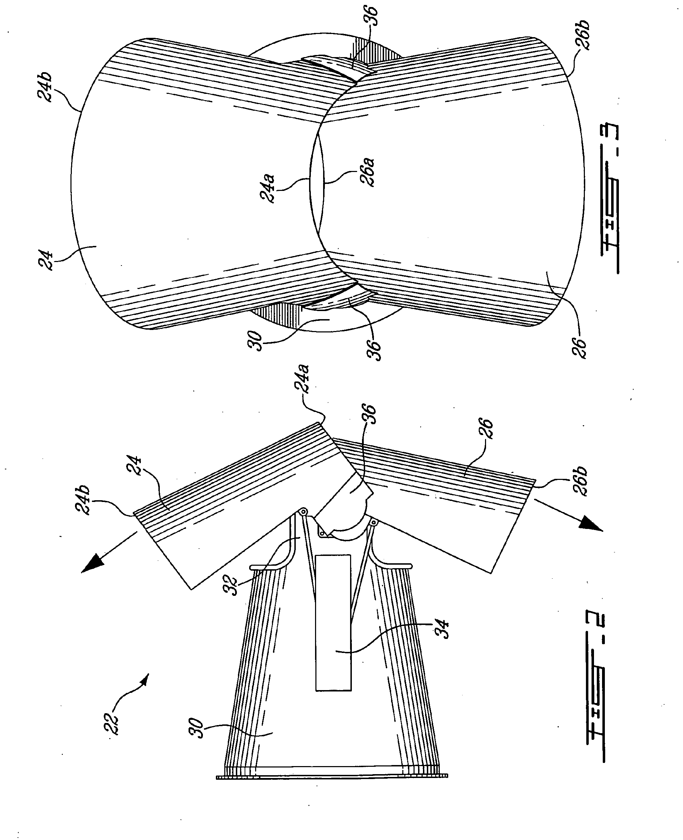

Referring now to FIG. 1, there is shown an example of a nacelle 20 including a thrust reverser 22 in the aft section 20a of the nacelle 20. The turbofan gas turbine engine is located within the nacelle 20 and the nacelle 20 is attached under the wings or on the fuselage of the aircraft using an appropriate arrangement (not shown). The thrust reverser 22 comprises two opposite pivoting doors 24, 26 forming most of the exhaust nozzle of the nacelle 20 when they are in their stowed position. In the example illustrated in FIG. 2, one door 24 is at the upper side and the other door 26 is at the bottom side. The nacelle 20 defines an outer aerodynamic shape, referred to herein as the outer mold line (OML) of the assembly.

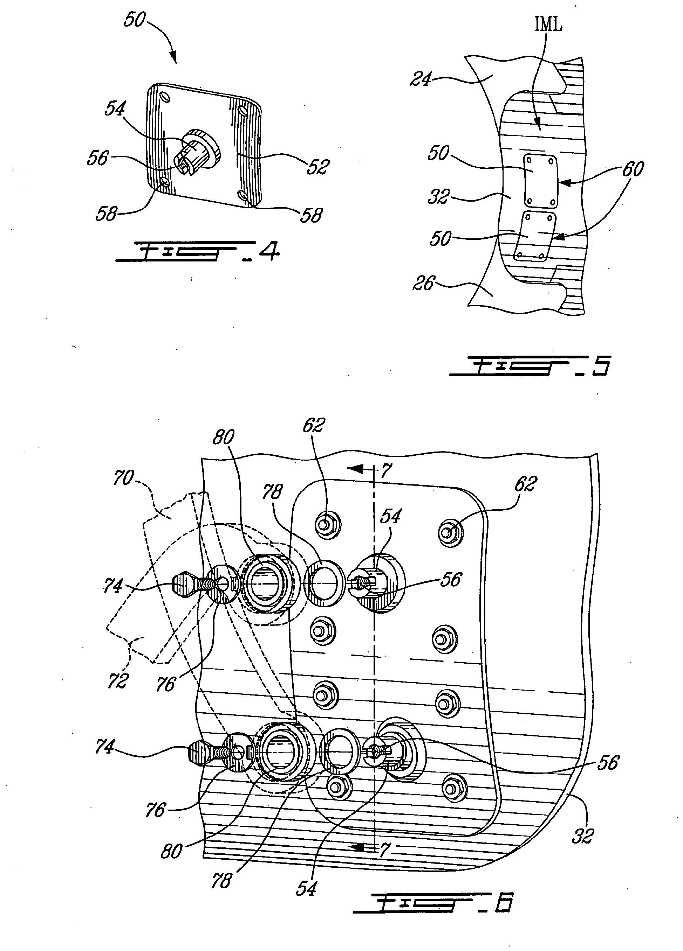

Each door 24, 26 has a trailing edge 24a, 26a adjacent to the propulsive jet outlet 28. The arrows in FIG. 1 show the direct thrust operation of the engine. FIG. 2 is an enlarged view showing an example of a jet pipe 30 having rearwardly extending jet pipe arms 32 to which the doors 24, 26 are pivotally connected. The doors 24, 26 are in their deployed position in FIG. 2. FIG. 3 is a rear view of what is shown in FIG. 2. The jet pipe 30 is concealed inside the aft section 20a of the nacelle 20 when the doors 24, 26 are in their stowed position, as in FIG. 1. It will be understood that the interior of the jet pipe, together with the interior of the doors when stowed, defines an inner aerodynamic shape or nozzle for direct exhaust gases of the engine, and this inner shape is referred to herein as the inner mold line (IML) of the assembly (see FIG. 5).

The arrows in FIG. 2 indicate the main flow path when the engine is operated during a thrust reversal. As can be seen, exhaust gases from the engine are redirected substantially forwardly when the doors 24, 26 are in their deployed position. The gases exit the doors 24, 26 in the vicinity of their leading edges 24b, 26b. These edges 24b, 26b are located at the front of the doors 24, 26 and are referred to as "leading" edges with reference to the travel path of the aircraft. The redirection of the exhaust gases from the engine creates a resulting horizontal retarding force opposing the forward movement of the aircraft. Increasing the output thrust generated by the engine increases the aerodynamic decelerating force. Also, in the illustrated example, the trailing edge 24a of the upper door 24 is pivoted behind the trailing edge 26a of the lower door 26, this resulting from the asymmetrical positioning of the pivots with reference to the horizontal medial plane of the jet pipe 30, as described in EP1903205. It should be noted that most of the details about actuators, the pivots and the mechanisms provided to lock the front of the doors 24, 26 during the direct thrust operation of the engine have been omitted from FIGS. 2 and 3, for clarity. It will be understood that an actuator system is to be provided on each side of the jet pipe 30, for instance, generally underneath a fairing 34 between the longitudinal sides of the doors 24, 26 when the doors are in their stowed position. Also, in the illustrated example a fairing 36 is provided for covering the door pivots when the doors are stowed. Fairings 34, 36 of course merge smoothly with nacelle 20 and doors 24, 26, when the doors are stowed, to provide an aerodynamically smooth outer mold line (OML) to the assembly. The actuators, pivots and pivot arms of the doors must reside within the envelope defined by the outer mold line (OML) and inner mold line (IML).

FIG. 4 shows an example of an individual pivot fitting 50. The pivot fitting 50 comprises a base 52 having a slightly arcuate shape. The curvature of the base 52 corresponds to the curvature of the jet pipe arm 32 in which the pivot fitting 50 will be positioned, and thus each pivot is designed to substantially follow the curvature of the space between the OML and IML and thus minimize the envelope needed therebetween. The illustrated base 52 is substantially rectangular. Other shapes can be used as well. The pivot fitting 50 also includes a shaft 54 projecting from one of the main sides of the base 52, namely the side that will be toward the outside of the reverser assembly. The shaft 54 is disposed on the base so that it projects normally to the plane of door rotation, i.e. provides an axis for door rotation, and preferably all pivot shafts 54 will be parallel or coaxial with one another, as the case may be, when installed on the reverser. The shafts 54 preferably include a coaxially disposed threaded bore 56 defined in the free end of the shaft. This threaded bore 56 can be used to receive a bolt, as explained hereafter. The base 52 also includes holes 58 for receiving fasteners.

FIG. 5 shows an example of the interior of a jet pipe arm 32 in which two pivot fittings 50 are provided. Each pivot fitting 50 is inserted into a recess 60 that is configured and disposed so that the pivot fittings 50 will be flush mounted with reference to the inner surface of the jet pipe arm 32, so that the aerodynamics of inner mold line (IML) of the jet pipe is not affected. The recess 60 is, for instance, a cut-away portion or a punched portion of the jet pipe arm 32. The jet pipe arm 32 also includes a side opening corresponding to each pivot fitting 50 for receiving its shaft 54. Each shaft 54 outwardly projects with reference to the jet pipe arm 32, as shown for instance in FIG. 6. FIG. 6 also shows that the illustrated pivot fittings 50 are connected to the jet pipe arm 32 using a plurality of bolts 62. Other fastening arrangements are also possible. While it is possible to provide two shafts 54 on a same side of a single base, the illustrated example uses two distinct pivot fittings 50, namely an upper door pivot fitting and a lower door pivot fitting, each having their own shaft 54. This facilitates maintenance since it is possible to only remove one door at a time. Each pivot fitting 50 is removable from inside the jet pipe 30.

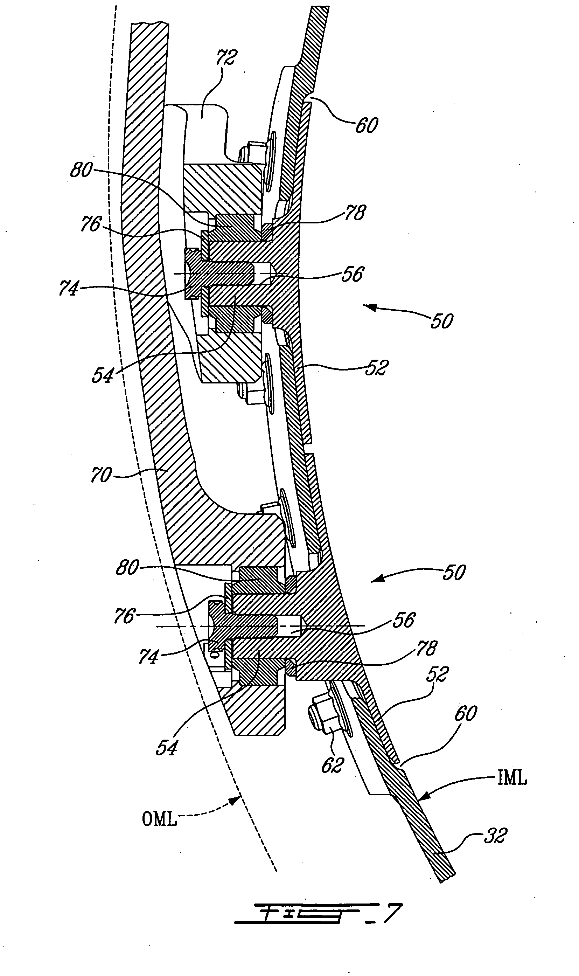

FIG. 7 is a cross sectional view taken along line 7-7 in FIG. 6. It shows the pivot fitting 50 being flush mounted inside the jet pipe arm 32. Bolts 62 are used in the illustrated embodiment for connecting the pivot fitting 50 to the jet pipe arm 32. The bolts heads can be hidden in chamfered holes. Also, FIG. 7 shows that the recess of the jet pipe arm 32 may require a reinforcement layer or embossed portion on the opposite side. This layer or portion is also shown in FIG. 6.

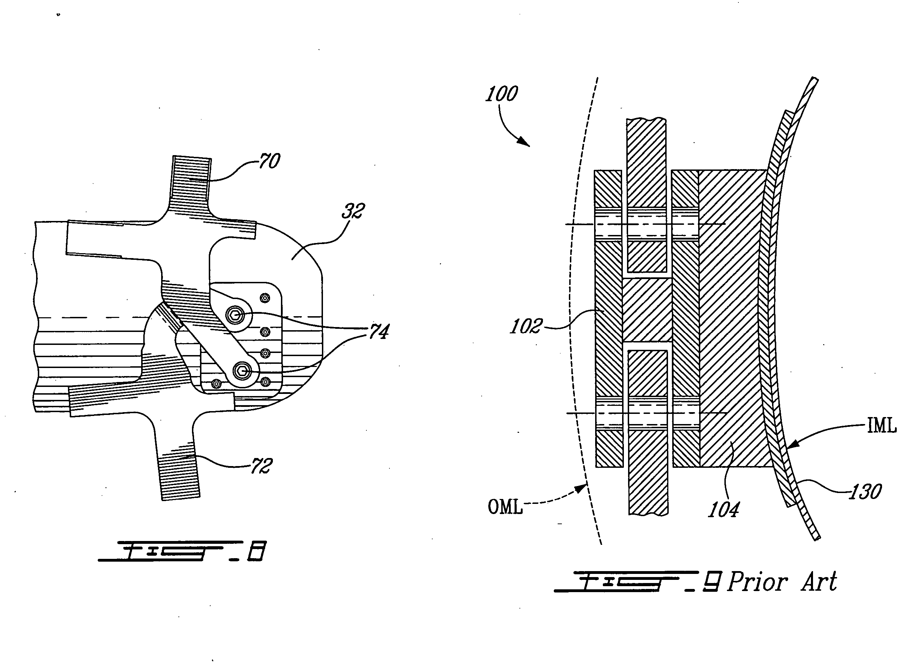

FIG. 8 shows the arrangement of FIG. 6 when assembled. FIG. 8 shows the pivot arm 70 for the upper door 24 and the pivot arm 72 for the lower door 26. The pivots for these pivot arms 70, 72 are asymmetrically disposed with reference to a medial plane of the jet pipe arm 32, as described in EP1903205. The pivot arms 70, 72 are preferably overlapping or crossing one another when the doors 24, 26 are in their stowed position, which thus allows a planar exit of the thrust reverser nozzle when the doors are stowed. Other arrangements are possible as well. FIG. 8 also shows that one end of the pivot arms 70, 72 has a pivot receiving hole for coaxially mounting the door on the shaft 54 of the corresponding pivot fitting 50 (the other end of each pivot arm is mounted to, or integrated with, its associated door 24, 26). A bearing 80 (see FIG. 7), preferably a spherical type, separates the pivot arm 70, 72 from the shaft 54. The bearings 80 lower the friction to a minimum and compensates any slight misalignment of the pivoting axis of the doors. The pivot arms 70, 72 may be connected to the corresponding shafts 54 and retained via a bolt 74 provided in the threaded bore 56 of the shaft 54, as best shown in FIG. 7. Each bolt 74 is used with a set of washers 76, 78, one of which 76 is a bendable lock washer cooperating with a notch in the shaft 54 for preventing the bolt 74 from rotating once it is installed. The other washer 78 provides adjustment of the reverser door in the transverse direction for easier adjustment of the reverser door position. Other arrangements can also be used as well. The bolts 74 can be prevented from rotating using any other accepted methods in aeronautics. The shaft 54 is sized for adequately taking the loading conditions in direct and reverse thrust, and has an adequate diameter for supporting the bearing 80 installed on each shaft 54. Referring to FIG. 8, each pivot arm 70, 72 has a curvature about the engine selected to follow the curvature of the space available between the OML and IML, and the hinges are configured to cross each other when the reverser doors move towards their stowed position. Lower pivot arm 72 is curved generally to follow the local outer profile of the jet pipe 30. Upper pivot arm 70 is curved to follow the local outer profile of the jet pipe 30, but also to avoid interference. with lower pivot arm 72 (since the pivots cross one another). This curvature assists in reducing the profile of the door-hinge arrangement, and allows a further reduction in the OML of the assembly. The skilled reader will appreciate that any suitable radius (or radii) of curvature may be provided, and that the "curvature" need not be continuous, nor arcuate, as depicted.

FIG. 9 schematically shows a prior art thrust reverser hinge arrangement. Each pivot fitting 100 has a clevis 102 that has an integral base 104 riveted to the jet pipe 130. The jet pipe 130 defines an inner mold line (IML) and the nacelle or thrust reverser outer skin defines an outer mold line (OML) for the assembly. As can be seen by a comparison of FIGS. 7 and 9, the envelope required to fit the prior art configuration is significantly larger than that required to fit the arrangement described above. Relative to the present approach, the prior art has a significantly larger OML and nacelle wetted area, factors that contribute to the increase of the nacelle drag when the reverser nozzle is in its stowed position, in order to accommodate the larger apparatus of the prior art.

Referring now to FIGS. 6 and 7, to mount a thrust reverser door 24, 26 onto jet pipe 30, e.g. during assembly or after maintenance, one positions the thrust reverser doors, then inserts a pivot fitting 50 inside the jet pipe 30 through its cutout and slides its shaft 54 (that is outwardly projecting through a side opening of the jet pipe 30) through the end of the pivot arm 70, 72 and bearing 80 of the door 24, 26, and then mounts a nut or other fastener to the shaft for securing the reverser door arms on their respective shaft.

As can be appreciated, the pivot fittings 50 and pivot arms 70, 72 provide both a low profile and light structure to which the thrust reverser doors 24, 26 can be attached, and thereby assist in reducing the overall nacelle wetted area, as well as assembly weight.

The above description is meant to be exemplary only, and one skilled in the art will recognize that other changes may also be made to the embodiments described provided they fall within the scope of the invention disclosed as defined by the appended claims. For instance, the shapes of the doors and the configuration of these doors with reference to each other may be different to what is shown and described. The shape and configuration of the base can be different to the rectangular one shown in the figures. The illustrated shaft can be replaced by a similar shaft-like member, for instance a large bolt or peg that is partially inserted in a corresponding threaded hole at the center of the base. The shaft-like member can also be made removable if, for instance, it is connected to the base by the threaded bolt holding the door or by a threaded end. It should be noted that although the doors 24, 26 are described herein and shown in the figures as being an upper reverser door 24 and a lower reverser door 26 movable in a vertical plane, doors may be configured with another suitable orientation, such as a left door and right door movable in a horizontal plane. Other suitable arrangements are possible as well.

## Claims

1. A thrust reverser (22) comprising:
first and second thrust reverser doors (24, 26) surrounding a jet pipe (30) to form an exhaust nozzle (28) having aerodynamic outer and inner mold line surfaces (OML, IML),
each door (24,26) having a pair of opposed pivot arms (70, 72);
the jet pipe (30) including a pair of jet pipe arms (32) having inner surfaces defining corresponding portions of the inner mold line surface (IML);
each door (24,26) being pivotally mounted at the pivot arms (70, 72) to the jet pipe arms (32) by a door pivot arrangement comprising a pivot fitting (50) having a base (52), wherein said jet pipe arms (32) each have a recess (60) co-operatively receiving the base (52) substantially flush with the inner mold line surface (IML), and a shaft (54) extending outwardly from the base (52) through an opening of a said jet pipe arm (32) and pivotally connected to corresponding ones of the pivot arms (70, 72), wherein the opening is sized to allow the shaft (54) to pass through the opening but to prevent the base (52) from passing through the opening.

2. The thrust reverser as defined in claim 1, wherein:
the first and second doors (24, 26) form an exit nozzle (28) having a radius of curvature; and
each door (24, 26) comprises a circumferentially extending thrust deflecting portion and the pair of pivot arms (70, 72) are disposed on either side of the deflecting portion, each pivot fitting includes fasteners (62) extending therethrough for fastening the fitting to the jet pipe arm, the pivot arms (70, 72) extending from the thrust deflecting portion to a free end, the pivot arms (70, 72) having corresponding radius of curvature following the exit nozzle curvature, with adjacent pivot arms (70, 72) curving around each other.

3. A thrust reverser according to claim 1 wherein said pivot fitting bases (52) are fixedly mounted to said jet pipe arms (32) flush with said inner mold line surface (IML).

4. A thrust reverser according to claim 3 wherein said pivot arms (70, 72) conform in curvature with said exhaust nozzle radially between said outer and inner mold line surfaces (OML, IML).

5. A thrust reverser according to claim 4 wherein each of said pivot fittings (50) further comprises a bearing (80) mounted on said shaft (54) inside a corresponding aperture in said pivot arms (70, 72), with outer and inner washers (76, 78) bounding said bearing (80) on said shaft (54), and a bolt (74) engages said shaft (54) to secure in turn said outer washer (76), bearing (80), and inner washer (78) on said shaft (54).

6. A thrust reverser according to claim 4 wherein adjacent pivot arms (70, 72) of said doors (24, 26) cross and overlap each other radially between said outer and inner mold line surfaces (OML, IML) when the doors are in their stowed position.

7. The thrust reverser defined in claim 1, wherein the shaft (54) comprises a fastening assembly (74, 76) for securing an end of the pivot arm of the thrust reverser door.

8. The thrust reverser as defined in claim 1 or 7, further comprising a plurality of threaded fasteners (62) removably securing the base (52) to the jet pipe arms (32).

9. The thrust reverser as defined in claim 1, wherein the base (52) second side has a radius of curvature substantially the same as a radius of curvature of the jet pipe arms (32) in the region where the base is mounted.

10. The thrust reverser as defined in any preceding claim, further comprising a washer (78) separating an inner side of the pivot arm from the first side of the base, the washer having a width selected to provide a desired spacing upon adjustment of the door.

11. A method of pivotally connecting a thrust reverser door to a thrust reverser according to claim 1, the method comprising the steps of:
providing an opening in one of the jet pipe arms;
providing the first door having the pair of opposed pivot arms, each pivot arm having a pivot receiving hole;
inserting a first pivot fitting through the opening from an inside of the jet pipe so that the shaft defines a pivot of the first pivot fitting extending to an outward side of the jet pipe and through the pivot receiving hole of a pivot arm; and
attaching the first pivot fitting to the one jet pipe arm.

## Patentansprüche

1. Schubumkehrer (22), umfassend:
eine erste und eine zweite Schubumkehrklappe (24, 26), die ein Strahlrohr (30) umgeben, um eine Auslassdüse (28) mit einer aerodynamischen äußeren und inneren Formlinienfläche (OML, IML) zu bilden,
wobei jede Klappe (24, 26) ein Paar gegenüberliegender Schwenkarme (70, 72) aufweist;
wobei das Strahlrohr (30) ein Paar Strahlrohrarme (32) mit Innenflächen aufweist, die entsprechende Abschnitte der inneren Formlinienfläche (IML) definieren;
wobei jede Klappe (24, 26) an den Schwenkarmen (70, 72) an den Strahlrohrarmen (32) durch eine Klappenschwenkanordnung schwenkbar montiert ist, die einen Schwenkbeschlag (50) umfasst, der aufweist: eine Basis (52), wobei die Strahlrohrarme (32) jeweils eine Aussparung (60) aufweisen, die die Basis (52) im Wesentlichen bündig mit der inneren Formlinienfläche (IML) zusammenwirkend aufnimmt, und einen Schaft (54), der sich von der Basis (52) durch eine Öffnung des Strahlrohrarms (32) nach außen erstreckt und schwenkbar mit entsprechenden der Schwenkarme (70, 72) verbunden ist, wobei die Öffnung so bemessen ist, dass der Schaft (54) durch die Öffnung hindurchtreten kann, jedoch verhindert wird, dass die Basis (52) durch die Öffnung hindurchtritt.

2. Schubumkehrer nach Anspruch 1, wobei:
die erste und die zweite Klappe (24, 26) eine Ausgangsdüse (28) mit einem Krümmungsradius bilden; und
jede Klappe (24, 26) einen sich in Umfangsrichtung erstreckenden Schubumlenkabschnitt umfasst und das Paar Schwenkarme (70, 72) auf beiden Seiten des Umlenkabschnitts angeordnet ist, wobei jeder Schwenkbeschlag Befestigungseinrichtungen (62) aufweist, die sich durch diesen hindurch erstrecken, zum Befestigen des Beschlags an dem Strahlrohrarm, wobei sich die Schwenkarme (70, 72) von dem Schubumlenkabschnitt zu einem freien Ende erstrecken, wobei die Schwenkarme (70, 72) einen entsprechenden Krümmungsradius aufweisen, der der Ausgangsdüsenkrümmung folgt, wobei benachbarte Schwenkarme (70, 72) umeinander gekrümmt sind.

3. Schubumkehrer nach Anspruch 1, wobei die Schwenkbeschlagbasen (52) fest an den Strahlrohrarmen (32) bündig mit der inneren Formlinienfläche (IML) montiert sind.

4. Schubumkehrer nach Anspruch 3, wobei die Schwenkarme (70, 72) in ihrer Krümmung mit der Auslassdüse radial zwischen der äußeren und der inneren Formlinienfläche (OML, IML) übereinstimmen.

5. Schubumkehrer nach Anspruch 4, wobei jeder der Schwenkbeschläge (50) ferner ein Lager (80) umfasst, das auf dem Schaft (54) im Inneren einer entsprechenden Öffnung in den Schwenkarmen (70, 72) montiert ist, wobei eine äußere und eine innere Unterlegscheibe (76, 78) das Lager (80) auf dem Schaft (54) halten und ein Bolzen (74) mit dem Schaft (54) in Eingriff steht, um wiederum die äußere Unterlegscheibe (76), das Lager (80) und die innere Unterlegscheibe (78) auf dem Schaft (54) zu sichern.

6. Schubumkehrer nach Anspruch 4, wobei benachbarte Schwenkarme (70, 72) der Klappen (24, 26) einander kreuzen und sich radial zwischen der äußeren und der inneren Formlinienfläche (OML, IML) überlappen, wenn die Klappen in ihrer verstauten Position sind.

7. Schubumkehrer nach Anspruch 1, wobei der Schaft (54) eine Befestigungsanordnung (74, 76) zum Sichern eines Endes des Schwenkarms der Schubumkehrklappe umfasst.

8. Schubumkehrer nach Anspruch 1 oder 7, ferner umfassend mehrere mit Gewinde versehene Befestigungseinrichtungen (62), die die Basis (52) abnehmbar an den Strahlrohrarmen (32) befestigen.

9. Schubumkehrer nach Anspruch 1, wobei die zweite Seite der Basis (52) einen Krümmungsradius aufweist, der im Wesentlichen dem Krümmungsradius der Strahlrohrarme (32) in dem Bereich entspricht, in dem die Basis montiert ist.

10. Schubumkehrer nach einem vorhergehenden Anspruch, ferner umfassend eine Unterlegscheibe (78), die eine Innenseite des Schwenkarms von der ersten Seite der Basis trennt, wobei die Unterlegscheibe eine Breite aufweist, die so gewählt ist, dass sie bei Einstellung der Klappe einen gewünschten Abstand vorsieht.

11. Verfahren zum schwenkbaren Verbinden einer Schubumkehrklappe mit einem Schubumkehrer nach Anspruch 1, wobei das Verfahren die Schritte umfasst zum:
Vorsehen einer Öffnung in einem der Strahlrohrarme;
Vorsehen der ersten Klappe mit dem Paar gegenüberliegender Schwenkarme, wobei jeder Schwenkarm ein Schwenkaufnahmeloch aufweist;
Einsetzen eines ersten Schwenkbeschlags durch die Öffnung von einer Innenseite des Strahlrohrs, so dass der Schaft einen Schwenkpunkt des ersten Schwenkbeschlags definiert, der sich zu einer Außenseite des Strahlrohrs und durch das Schwenkaufnahmeloch eines Schwenkarms erstreckt; und
Anbringen des ersten Schwenkbeschlags an dem einen Strahlrohrarm.

## Revendications

1. Inverseur de poussée (22) comprenant :
une première et une seconde portes d'inversion de poussée (24, 26) entourant un tuyère (30) pour former une buse d'échappement (28) ayant des surfaces aérodynamiques de ligne de moule extérieure et intérieure (OML, IML),
chaque porte (24, 26) comportant une paire de bras pivotants opposés (70, 72) ;
la tuyère (30) comprenant une paire de bras de tuyère (32) présentant des surfaces internes définissant des parties correspondantes de la surface de ligne de moule interne (IML) ;
chaque porte (24, 26) étant montée de manière à pouvoir pivoter au niveau des bras pivotants (70, 72) sur les bras de tuyère (32) par un agencement de pivot de porte comprenant un raccord pivotant (50) ayant une base (52), lesdits bras de tuyère (32) ayant chacun un évidement (60) recevant de manière coopérante la base (52) sensiblement au ras de la surface intérieure de la ligne de moulage (IML), et un arbre (54) s'étendant vers l'extérieur à partir de la base (52) à travers une buse ouverture dudit bras de tuyère (32) et connecté de manière à pouvoir pivoter à des bras correspondants parmi les bras pivotants (70, 72), l'ouverture étant dimensionnée pour permettre à l'arbre (54) de passer à travers l'ouverture mais pour empêcher la base (52) de passer à travers l'ouverture.

2. Inverseur de poussée selon la revendication 1, dans lequel :
les première et seconde portes (24, 26) forment une buse de sortie (28) présentant un rayon de courbure ; et
chaque porte (24, 26) comprend une partie déflectrice de poussée s'étendant circonférentiellement et la paire de bras pivotants (70, 72) sont disposés de part et d'autre de la partie déflectrice, chaque raccord pivotant comprend des fixations (62) s'étendant à travers celle-ci pour fixer le raccord au bras de tuyère, les bras pivotants (70, 72) s'étendant depuis la partie déflectrice de poussée jusqu'à une extrémité libre, les bras pivotants (70, 72) ayant un rayon de courbure correspondant suivant la courbure de la buse de sortie, avec des bras pivotants adjacents (70, 72) recourbés les uns autour des autres.

3. Inverseur de poussée selon la revendication 1, dans lequel lesdites bases de raccord pivotant (52) sont montées de manière fixe sur lesdits bras de tuyère (32) à ras de ladite surface intérieure de ligne de moule (IML).

4. Inverseur de poussée selon la revendication 3, dans lequel lesdits bras pivotants (70, 72) épousent en courbure ladite buse d'échappement radialement entre lesdites surfaces de ligne de moule extérieure et intérieure (OML, IML).

5. Inverseur de poussée selon la revendication 4, dans lequel chacun desdits raccords pivotants (50) comprend en outre un palier (80) monté sur ledit arbre (54) à l'intérieur d'une ouverture correspondante dans lesdits bras pivotants (70, 72), avec des rondelles extérieure et intérieure (76, 78) limitant ledit palier (80) sur ledit arbre (54), et un boulon (74) s'engage dans ledit arbre (54) pour fixer à son tour lesdits rondelle extérieure (76), palier (80) et rondelle intérieure (78) sur ledit arbre (54).

6. Inverseur de poussée selon la revendication 4, dans lequel des bras pivotants adjacents (70, 72) desdites portes (24, 26) se croisent et se chevauchent radialement entre lesdites surfaces de ligne de moule extérieure et intérieure (OML, IML) lorsque les portes sont dans leur position de rangement.

7. Inverseur de poussée selon la revendication 1, dans lequel l'arbre (54) comprend un ensemble de fixation (74, 76) pour fixer une extrémité du bras pivotant de la porte d'inverseur de poussée.

8. Inverseur de poussée selon la revendication 1 ou 7, comprenant en outre une pluralité de fixations filetées (62) fixant de manière amovible la base (52) aux bras de tuyère (32).

9. Inverseur de poussée selon la revendication 1, dans lequel le second côté de la base (52) a un rayon de courbure sensiblement identique à un rayon de courbure des bras de tuyère (32) dans la zone où la base est montée.

10. Inverseur de poussée selon l'une quelconque des revendications précédentes, comprenant en outre une rondelle (78) séparant un côté intérieur du bras pivotant du premier côté de la base, la rondelle ayant une largeur sélectionnée pour fournir un espacement souhaité lors du réglage de la porte.

11. Procédé de connexion pivotante d'une porte d'inverseur de poussée à un inverseur de poussée selon la revendication 1, le procédé comprenant les étapes consistant à :
prévoir une ouverture dans l'un des bras de tuyère ;
prévoir que la première porte comporte la paire de bras pivotants opposés, chaque bras pivotant comportant un trou de réception de pivot ;
insérer un premier raccord à pivot à travers l'ouverture depuis l'intérieur de la tuyère de sorte que l'arbre définisse un pivot du premier raccord à pivot s'étendant vers un côté extérieur de la tuyère et à travers le trou de réception de pivot d'un bras de pivot ; et
fixer le premier raccord à pivot sur le bras de tuyère.
